# EUROPEAN PATENT APPLICATION

(11) **EP 3 623 401 A1**
(43) Date of publication of application: **18.03.2020**
(21) Application number: 18194518.9
(22) Date of filing: 14.09.2018
(51) Int. Cl.: C08G 18/48, C08K 3/34, C08K 5/357, C08J 9/00

(54) **INORGANIC PARTICLE DISPERSION IN POLYOL**

(71) Applicant: BASF SE, 67056 Ludwigshafen am Rhein (DE)
(72) Inventor: THIELBEER, Frank, 49448 Lemfoerde (DE); LUTTER, Heinz-Dieter, 49448 Lemfoerde (DE); KOENIG, Christian, 67056 Ludwigshafen (DE); HADICK, Udo, 49448 Lemfoerde (DE); DOROODIAN, Amir, 49448 Lemfoerde (DE)
(74) Representative: Féaux de Lacroix, Stefan

(57) **Abstract**

Disclosed is the use of an N-carbaldehyde of a nitrogen-containing aliphatic heterocyclic compound as a stabilizer for inorganic particles in polyols.

## Description

The present invention relates to the use of an N-carbaldehyde of a nitrogen-containing aliphatic heterocyclic compound as a stabilizer for inorganic particles in polyols, the respective dispersions, their preparation and use for preparing a polyurethane as well as the process for preparing the polyurethane and the polyurethane.

In general phase-stable polyol dispersions can be obtained by employing tailor-made stabilizers using electrostatic or steric stabilization. If no tailor-made stabilizer is available, the preparation of stable dispersions is very difficult. Commonly prepared systems such as styrene-acrylonitrile polymer dispersions in polyols are usually stabilized by interaction of SAN compatible macromers with SAN as dispersed phase. However, inorganic fillers such as metals, metalloids and their oxides cannot be converted into stable dispersion by using the previous approach. Therefore different concepts for stabilization have to be developed.

It is known that the mechanical properties of polyurethane materials can be improved by including nanoparticles in the isocyanate or polyol component.

Thus, DE-A 103 38 164 discloses a process for producing a polyurethane foam, which comprises reacting a polyisocyanate and a polyol in the presence of a blowing agent and of silica gel particles, with the silica gel particles being functionalized with aminopropyltriethoxysilane. The silanizing reagent makes the particle surface of the silica gel particles hydrophilic, with this hydrophilic surface having surface groups which are reactive toward isocyanate. As a result, the particles are covalently bound into the polymer matrix of the foam during the polymerization reaction to form the polyurethane form and act as reinforcing material. This enables the proportion of open cells in the polyurethane foam to be regulated, which can lead to an improvement in the acoustic properties (sound damping) and the thermal insulation capability of the polyurethane foam. The surface-functionalized SiO₂ particles are incorporated into the polyol component. The SiO₂ particles are preferably produced from tetraethoxysilane in an organic solvent. This synthetic route is costly since an expensive precursor is used and, in addition, the particle yield in the synthesis is low. Furthermore, this synthesis gives particles having a size of 100 nm or more, which can be considered to be conventional fillers.

EP-A 1 366 112 discloses a process for producing a silicon dioxide dispersion by a) initial charging of an aqueous silicate solution, b) polycondensation of the silicate to a particle size of from 3 to 50 nm, c) adjustment of the silica sol obtained to an alkaline pH, d) optionally concentration of the sol, e) mixing of the sol with constituents of the outer, flowable phase of the dispersion and f) optionally removal of water and/or other solvent constituents from the dispersion. Outer flowable phases mentioned are polyols, polyamines, linear or branched polyglycol ethers, polyesters and polylactones. In the examples, a silica sol whose pH has been set to 10.5 to 11 is mixed with isopropanol and the water is removed to a content of < 0.1 % by atmospheric distillation. Various polyethers are then added while stirring. The volatile constituents are subsequently removed by distillation at 50 °C under reduced pressure. Mention is made of the use of the silicon dioxide dispersions for the production of closed-cell or open-cell foams based on polyurethanes, polysiloxanes, polyolefins or polystyrene. The sols have a pH of from 10 to 12 and are therefore difficult to handle. The sols have only a low concentration of silicon dioxide particles (up to 15 parts of SiO₂ particles per 100 parts of sol). Relatively large amounts of solvent are required, which makes the production of the silicon dioxide dispersions relatively expensive.

WO 2010/043530 discloses a method for producing polyol dispersions containing an aqueous silica sol having an average particle diameter of 1 to 150 nm. The aqueous silica sol is mixed with an organic diluent and a polyol as well as a compound having alkoxylated silyl groups and groups which are reactive towards an alcohol. According to example D3, an aqueous silica sol is mixed with isopropanol and trimethoxysilane obtained by reaction of 3-(2,3-epoxypropoxy)propyltrimethoxysilane and Jeffamine® XTJ-505. After the reaction, a polyol was added.

EP-A-1 112 838 relates to decorative components having an elastomeric outer surface and methods of making such components. A sprayable elastomer composition is disclosed, comprising an aromatic isocyanate composition, a solids containing polyol and a further polyol. An optional additional component can be among others a thixotropic agent. The polyol can be selected from graft polyols, polyisocyanate polyaddition polyols, polymer polyols, PHD polyols and mixtures thereof. No specific examples of thixotropic agents are given.

EP-B-2 614 118 discloses silicon dioxide dispersions which can be produced by mixing of an aqueous silica sol having an average particle diameter of from 1 to 150 nm with at least one chain extender to give a mixture of aqueous silica sol and chain extender, removal of the water from this mixture, wherein the silicon dioxide is modified by means of at least one silane, and wherein at least one polyol is added to the silicon dioxide dispersion. Preferably the polyol is a polyesterol.

The object underlying the present invention is to provide stable dispersions of inorganic particles, preferably oxidic silicon particles having an average particle size in the µm-range in polyols. By employing this dispersion in the preparation of polyurethanes, the hardness of the system shall preferably be increased.

The object is achieved according to the present invention by the use of an N-carbaldehyde of a nitrogen-containing aliphatic heterocyclic compound as a stabilizer for inorganic particles in polyols.

The object is furthermore achieved by a dispersion comprising the above N-carbaldehyde together with inorganic particles in polyols.

The object is furthermore achieved by a process for preparing this dispersion comprising the step of mixing the above N-carbaldehyde with inorganic particles in a polyol.

The object is furthermore achieved by the use of this dispersion for preparing a polyurethane.

The object is furthermore achieved by a process for preparing a polyurethane comprising mixing this dispersion with isocyanates and/or polyisocyanates and, if appropriate, one or more of further compounds having hydrogen atoms which are reactive towards isocyanates, chain extenders and/or crosslinkers, catalysts, blowing agents and further additives, and reacting the mixture to form the polyurethane.

The object is furthermore achieved by a polyurethane, obtainable by this process.

According to the present invention it has been found that N-carbaldehydes of a nitrogen-containing aliphatic heterocyclic compound can be successfully employed as a stabilizer for inorganic particles in polyols. The polyols are therein preferably polyether polyols, specifically having an OH value of less than 100 mg_{KOH}/g, more preferably less than 50 mg_{KOH}/g, specifically 35 mg_{KOH}/g or less.

The stabilizer employed is an N-carbaldehyde of a nitrogen-containing aliphatic heterocyclic compound. The nitrogen is therein preferably part of the heterocyclic ring. Preferably the N-heterocyclic ring contains 5 to 7 ring members, more preferably 5 or 6 ring members, specifically 6 ring members.

Preferably, the nitrogen-containing aliphatic heterocyclic compound is selected from piperidine, morpholine, piperazine, pyrrolidine, pyrrolidone, preferably morpholine. These compounds can be substituted, e.g. by C₁₋₆-alkyl residues. Most preferably, they are not substituted in this manner.

Most preferably, 4-morpholine carbaldehyde is employed as the stabilizer. This compound can be obtained by Altana/BYK as BYK-7410 ET. The main component of this stabilizer is 4-morpholine carbaldehyde in amide ether as a solvent. BYK-7410 ET is a solution of a modified urea containing 40 % active substance. It has a density at 20 °C of 1.18 g/ml, and a flash point of 118 °C, employing amide ether as solvent.

According to the present invention it was found that this compound can be successfully employed as a stabilizer for inorganic particles, specifically oxidic silicon particles, in polyol.

For comparison, pentanoic acid, 5-(dimethylamino)-2-methyl-5-oxo-, methyl ester in amide ester as solvent (BYK-7420 ES of Altana/BYK) does not lead to stable dispersion of this kind. According to the present invention, it is not necessary to employ additional organic solvents which must be separated after the preparation of the dispersion. In contrast to WO 2010/043530, not silica sols are employed but inorganic particles, preferably oxidic silicon particles having preferably a particle size in the µm-range, preferably a (number) average particles size (d₅₀) in the range of from 0.1 to 100 µm, more preferably 0.5 to 20 µm, most preferably 1 to 10 µm. The particle size can be determined by measuring the size of a certain number of particles by hand or by employing suitable analytic tools, e.g. a camsizer. Typically, at least 100 discrete particles are measured in order to obtain the d₅₀ value. The average particle size (d₅₀) is preferably the arithmetic mean diameter (d).

Preferably, particle sizes are determined by static laser diffraction using a Mastersizer 2000 (Malvern Instruments Ltd) after dilution of the sample with isopropanol in order to obtain an optical concentration suitable for the measurement. For the dispersion of the sample a dispersing module Hydro SM was used with a stirrer speed of 2500 rpm. The calculation of the particle size distribution may be performed by the Mastersizer 2000 using Fraunhofer theory.

The oxidic silicon particles are preferably silicon dioxide (silica), kaolin, silicates, silicic acids or mixtures thereof, preferably silicon dioxide particles or aluminium silicate particles.

According to the present invention, the amount of oxidic silicon particles which can be included in a stable dispersion can be high. Preferably, the amount of oxidic silicon particles, based on the polyol dispersion is in the range of from 5 to 60 wt%, more preferably from 15 to 45 wt%, most preferably 20 to 30 wt%.

When silicon dioxide or silicates are mixed with polyols, they typically separate after a short time, and stable dispersions cannot be obtained. In order to obtain stable dispersions, a stabilizer is necessary. In this disclosure, the term "stabilizer" refers, in a general sense, to a chemical compound. The stabilizer is a compound that is assumed to stabilize dispersions of e.g. silicon dioxide or silicate particles in polyols and thus is assumed to stabilize polyol dispersions. This allows for a phase-interaction between silicon-containing particles and polyol, so that a stable dispersion is achieved and precipitation of the particles is prevented. No sedimentation occurs within 3 days at 25 °C. The stabilizer employed according to the present invention interacts both with the e.g. silicon-containing particles and the continuous polyol phase.

Typical polyols which are used comprise polyether or polyester polyols, more preferably polyetherols which can be commonly manufactured. Usually, they are synthesized from polyols and alkylene oxides in the presence of basic (for polyethers) or Lewis acid catalysts (for polyesters).

Suitable basic catalysts are alkali metal hydroxides or alkali metal alkoxides, as discussed below.

The suitable Lewis acid catalysts generally comprise tin-based, boron-based, aluminium-based, gallium-based, rare earth-based, zinc-based, or titanium-based compounds.

Representative tin-based compounds include: dibutyltin diacetate, dibutyltin, dibromide, dibutyltin dichloride, dibutyltin dilaurate, dibutyltin dimethoxide, dibutyltin oxide, dimethyltin diacetate, dimethyltin dibromide, diphenyltin dichloride, diphenyltin oxide, methyltin trichloride, phenyltin trichloride, tin(IV) acetate, tin(IV) bromide, tin(IV) chloride, tin(IV) iodide, tin(II) oxide, tin(II) acetate, tin(II) bromide, tin(II) chloride, tin(II) iodide, and tin(II) 2-ethylhexanoate (stannous octoate). Representative boron-based compounds include: boron tribromide, boron trichloride, boron trifluoride, and tris(pentafluorophenyl)borane. Representative aluminium-based compounds include: aluminium chloride and aluminium bromide. Representative gallium-based compounds include: gallium chloride, gallium bromide, and gallium(III) acetylacetonate.

Representative rare earth catalysts are generally salts of scandium, yttrium, lanthanum, praseodymium, neodymium, erbium, thulium, ytterbium, neodymium or lutetium. Examples include: ytterbium triflate, ytterbium(III) acetylacetonate, erbium(III) trifluorosulfonate (erbium triflate), erbium(III) acetylacetonate, holmium triflate, terbium triflate, europium triflate, europium(III) trifluoroacetate, samarium triflate, neodymium triflate, neodymium(III) acetylacetonate, praseodymium triflate, lanthanum triflate, and dysprosium triflate. Representative zinc-based compounds include zinc chloride and zinc bromide. Representative titanium compounds include titanium(IV) bromide and titanium(IV) chloride.

The polyol of the dispersion can be freely chosen. It has preferably an OH number of less than 100, preferably of less than 50, more preferably of 35 or less. It can have e.g. a functionality of 2 to 8. Examples of polyols are polyetherols, polyesterols, polyTHF, hydroxy functional polybutadienes, etc. Preferred are polyetherols and polyesterols.

The molecule which comprises in its structure one or more hydroxyl-terminated polyether and/or polyester chains is preferably selected from two- to eight-functional, preferably two- to six-functional polyether polyols and/or polyester polyols according to one embodiment of the invention of a molecular weight (Mₙ) of from 500 to 30,000 g/mol, preferably 10,000 to 25,000 g/mol. The molecular weight (Mₙ) can be determined by gel permeation, chromatography using polystyrene as standard and THF as eluent solvent.

The at least one polyol preferably has an OH value of < 100, more preferably < 50, specifically 35 or less mg_{KOH}/g.

The hydroxyl number is determined in accordance with DIN 53240 from 2012 (DIN = "Deutsche Industrienorm", i.e. German industry standard).

The polyether polyols employed according to the present invention are prepared by known methods, for example from one or more alkylene oxides having from 2 to 4 carbon atoms in the alkylene radical by anionic polymerization using alkali metal hydroxides or alkali metal alkoxides as catalysts with addition of at least one polyol starter molecule, or by cationic polymerization using Lewis acids, such as antimony pentachloride or boron fluoride etherate. Suitable alkylene oxides are, for example, tetrahydrofuran, 1,3-propylene, oxide, 1,2- or 2,3- butylene oxide and preferably ethylene oxide and 1,2-propylene oxide.

Furthermore multi-metal cyanide compounds, known as DMC catalysts, can also be used as catalysts. The alkylene oxides can be used individually, alternately or in succession or as a mixture.

Possible starter molecules are two- to eight-functional alcohols, such as ethylene glycol, 1,2- and 1,3-propane diol, diethylene glycol, dipropylene glycol, 1,4-butane diol, glycerol or dimethylol propane, sugars, sorbitol or pentaerythritol, preferably glycerol.

Suitable molecular weight ranges for the polyester polyols employed for the purposes of the present invention are known per se to a person skilled in the art. According to another preferred embodiment, the molecular weight (Mₙ) of the polyester polyol is in the range of from 500 to 5000 g/mol, preferably in the range of from 500 to 4000 g/mol, more preferably in the range of from 800 to 3000 g/mol and most preferably in the range of from 1000 to 2500 g/mol.

In the present invention, the polyester polyol is based on a polyhydric alcohol. Suitable polyhydric alcohols include, for example, polyhydric aliphatic alcohols, for example aliphatic alcohols having 2, 3, 4 or more OH groups, for example 2 or 3 OH groups. Suitable aliphatic alcohols for the purposes of the present invention include, for example, C₂ to C₁₂ alcohols, preferably C₂ to C₈ alcohols and most preferably C₂ to C₆ alcohols. It is preferable for the purposes of the present invention for the polyhydric alcohol to be a diol, and suitable diols are known per se to a person skilled in the art.

Suitable aliphatic C₂ to C₆ diols include, for example, ethylene glycol, diethylene glycol, 3-oxa-pentane-1,5-diol, 1,3-propanediol, 1,2-propanediol, dipropylene glycol, 1,4-butanediol, 1,5-pentanediol, 1,6-hexanediol, 2-methyl-1,3-propanediol and 3-methyl-1,5-pentanediol. It is further preferable for the polyhydric alcohol to be selected from the group consisting of 1,3-propanediol and 1,4-butanediol.

In one further embodiment, the present invention also provides a polyurethane as described above wherein the at least one polyhydric alcohol is selected from the group consisting of aliphatic C₂ to C₆ diols.

In one further embodiment, the present invention also provides a polyurethane as described above wherein the at least one polyhydric alcohol is selected from the group consisting of 1,3-propanediol and 1,4-butanediol.

It is also possible for the purposes of the present invention to employ a polyhydric alcohol at least partly obtained from renewable raw materials. The polyhydric alcohol in question may be partly or wholly obtained from renewable raw materials. It is also possible to employ a mixture of two or more polyhydric alcohols in the present invention. Where a mixture of two or more polyhydric alcohols is employed, one or more of the polyhydric alcohols employed may be at least partly obtained from renewable raw materials.

1,3-Propanediol may accordingly comprise synthetically produced 1,3-propanediol, but in particular 1,3-propanediol from renewable raw materials ("biobased 1,3-propanediol"). Biobased 1,3-propanediol is obtainable from maize (corn) and/or sugar for example. A further possibility is the conversion of waste glycerol from biodiesel production. In one further preferred embodiment of the invention, the polyhydric alcohol is a 1,3-propanediol at least partly obtained from renewable raw materials.

In one further embodiment, the present invention also provides a polyurethane as described above wherein the at least one polyhydric alcohol is a 1,3-propanediol at least partly obtained from renewable raw materials.

Alcohols having three or more OH groups can also be used to enhance the functionality of the polyester polyols. Examples of alcohols having three or more OH groups are glycerol, trimethylolpropane and pentaerythritol. It is also possible to use oligomeric or polymeric products having two or more hydroxyl groups. Examples thereof are polytetrahydrofuran, polylactones, polyglycerol, polyetherols, polyesterol or α,ω-dihydroxypolybutadiene.

The polyester polyol in the present invention can be based not only on at least one polyhydric alcohol but also on a mixture of two or more dicarboxylic acids, wherein at least one of the two or more dicarboxylic acids is at least partly obtained from renewable raw materials. Suitable dicarboxylic acids for preparing polyester polyols are known per se to a person skilled in the art and described in US 2016/0152761.

Most advantageously, the polyol employed in the dispersion according to the present invention is a polyether polyol, preferably having a molecular weight (Mₙ) of from 500 to 30,000 g/mol, more preferably 1,500 to 10,000 g/mol, most preferably 3,000 to 7,000 g/mol. The molecular weight (Mₙ) can be determined as indicated above.

The preferred polyether polyol has an OH value of less than 100 mg_{KOH}/g, more preferably of less than 50 mg_{KOH}/g, most preferably of 35 mg_{KOH}/g or less.

Most preferably, the polyether polyol is based on a three-functional polyol, specifically glycerol, which is reacted or grafted with propylene oxide. It furthermore preferably has an ethylene oxide cap at the end of the polypropylene oxide chains. The amount of the ethylene oxide cap is preferably 16 wt% or less, based on the final polyether polyol.

The stabilizer, preferably 4-morpholine carbaldehyde, is specifically useful for this type of hydrophobic polyether polyol.

The amount of the stabilizer, based on the polyol dispersion, is preferably in the range of from 0.1 to 5.0 wt%, more preferably 0.25 to 3.0 wt%, most preferably 0.5 to 1.5 wt%. For example, 1 wt% of the stabilizer is employed. These amounts refer preferably to the 40 wt% solution of 4-morpholine carbaldehyde in an amide ether solvent.

The polyol dispersion preferably contains no water or only a minor amount of water. Water contents, based on the polyol dispersion, of 5 wt% or less, more preferably 3 wt% or less, most preferably 1 wt% or less can be tolerated.

According to the present invention it was surprisingly found that the preferred stabilizer, which is commonly employed as a thixotropic agent in aqueous systems forming H-bridges, is effective as a stabilizer for inorganic particles in non-aqueous polyol systems, specifically hydrophobic polyether polyol systems.

Furthermore, it was found according to the present invention that the reaction of the polyol dispersion with isocyanate compounds in order to form polyurethanes, is not hindered by the inclusion of the stabilizer. Even in the polyurethane foams, the inorganic particles are still dispersed in a stable manner. The foams obtained are stable and do no collapse. This is astonishing since inorganic particles like alumosilicates have a high density and are normally difficult to disperse in polyols. According to the present invention, no covalent bonding of the stabilizer with the inorganic particles is necessary.

The dispersion can be prepared by mixing the stabilizer with the inorganic particles, preferably the oxidic silicon particles, in the at least one polyol, preferably at a temperature in the range of from 0 to 260 °C, more preferably 20 to 200 °C, most preferably 25 to 180 °C.

The polyol dispersion according to the present invention has preferably a viscosity in the range of from 500 to 100,000 mPas, more preferably 1,000 to 50,000 mPas.

The viscosity of the polyols and polyol dispersions is, unless indicated otherwise, determined at 25 °C in accordance with DIN EN ISO 3219 from 1994 by means of a Rheotec RC20 rotational viscometer using the spindle CC 25 DIN (spindle diameter: 12.5 mm; internal diameter of measuring cylinder: 13.56 mm), however at a shear rate of 100/1 s (instead of 50/1 s).

The molecular weight of a polyol in general may be calculated by the following formula: Mₙ = f x 56100/OH value, wherein Mₙ = number average molecular weight in g/mol, f = functionality, the number of OH groups per molecule, determined by the starter used to synthesize the macromer, OH value = hydroxyl number of oligo-polyol in mg_{KOH}/g.

The dispersion according to the present invention preferably contains 0.1 to 5.0 wt%, more preferably 0.25 to 3 wt% of stabilizer and 5 to 60 wt%, more preferably 15 to 45 wt%, specifically 20 to 30 wt% of inorganic particles, preferably oxidic silicon particles, based on the total weight of the dispersion.

The dispersion is stable, which means that after 3 days of storage at 25 °C no deposition or precipitate can be visually determined.

By employing the oxidic silicon particles, the flammability and emissions such as VOC and FOG of the polyurethanes are reduced significantly.

The polyol dispersion stabilized by using at least one inventive stabilizer may be used for the production of polyurethanes (PU).

Usually, in the production of polyurethanes, at least one polyol is reacted with at least one polyisocyanate having on average at least 1.7, preferably at least 2 isocyanate groups, optionally in the presence of at least one blowing agent and/or catalyst.

A typical A-component in this PU production process consists of one or more polyols, one or more polyurethane catalysts, one or more surfactants, one or more crosslinkers, water or optionally other chemical or physical blowing agents. The B-component usually contains the isocyanates.

In another embodiment of the present invention, the polymer polyol comprising the inventive stabilizer may also be used to obtain a stable A-component in a PU production process, such that the A-component may be stored for a prolonged time without phase separation.

The dispersion is used for preparing a polyurethane, specifically for reducing the flammability of and/or emissions from polyurethanes.

When preparing a polyurethane, one or more further components having hydrogen atoms which are reactive towards isocyanates, chain extenders and/or crosslinkers, catalyst, blowing agents and further additives may by employed. They are described in the literature cited above.

For forming polyurethane foams the reaction mixture preferably comprises blowing agents.

The invention is further illustrated by the following examples.

### Stabilizers

Additive 1: BYK 7410 ET from Altana
   Modified urea (40 wt%) in amide ether (60 wt%) (solvent)
   Main component according to technical data sheets: 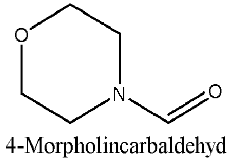
Additive 2: BYK 7420 ES from Altana
   Modified urea (40 wt%) in amide ester (60 wt%) (solvent)
   Main component according to technical data sheets:

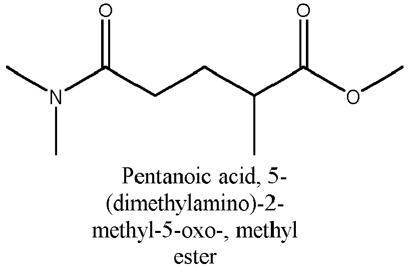

### Experimental part

### Comparative Example 1

### Dispersion of alumosilicate in polyetherol (dispersion 1)

A Büchi autoclave was filled with 450 g three-functional polyetherol based propylene oxide and a 13 wt% ethylene oxide end-block (OH value 35 mg_{KOH}/g_{polymer} (determined by DIN 53240) by BASF SE) and 50 g aluminium (sodium) silicate (approximately 81 % silicon oxide, particle size d₅₀ = 7 µm; CAS 1344-00-9 Sipernat® 820 A by Evonik Industries). The reaction mixture was heated to 200 °C under constant stirring (400 rpm) and further heated and stirred for 1 h.

A silicon-containing dispersion in polyetherol was yielded with a viscosity of 3292 mPas (25 °C & 100 s⁻¹) and an OH value of 27.5 mg_{KOH}/g_{polymer} and a d[4,3] = 9.14 µm. Precipitation of the dispersed phase was observed in the course of time.

### Example 2

### Dispersion of alumosilicate in polyetherol with additive 1 (dispersion 2)

A Büchi autoclave was filled with 198 g of dispersion 1 followed by addition of 2 g (1 wt%) rheology additive 1 (BYK-7410 ET by Altana). The mixture was further stirred for 15 min at 25 °C. A silicon-containing dispersion in polyetherol was yielded with a viscosity of 1745 mPas (25 °C & 100 s⁻¹) and an OH value of 27.5 mg_{KOH}/g_{polymer} and a d[4,3] = 9.14 µm. No precipitation of the dispersed phase was observed in the course of time.

### Example 3

### Direct preparation of a stable dispersion of alumosilicate in polyetherol with additive 1 (dispersion 3)

A Büchi autoclave was filled with 450 g of three-functional polyetherol based propylene oxide and a 13 wt% ethylene oxide end-block (OH value 35 mg_{KOH}/g_{polymer} (determined by DIN 53240) by BASF SE), 50 g aluminium (sodium) silicate (approximately 81 % silicon oxide, particle size d₅₀ = 7 µm; CAS 1344-00-9 Sipernat® 820 A by Evonik Industries) and 5 g (1 wt%) rheology additive 1 (BYK 7410 ET by Altana). The mixture was stirred for 60 min at 180 °C.

A silicon-containing dispersion in polyetherol was yielded with a viscosity of 3292 mPas (25 °C & 100 s⁻¹) and an OH value of 27.5 mg_{KOH}/g_{polymer} and a d[4,3] = 9.14 µm. No precipitation of the dispersed phase was observed in the course of time.

### Comparative Example 4

### Dispersion of alumosilicate in polyetherol with additive 2 (dispersion 4)

A Büchi autoclave was filled with 197 g of dispersion 1 followed by addition of 3 g (1.5 wt%) rheology additive 2 (BYK 7420 ES by Altana). The mixture was further stirred for 15 min at 25 °C.

A silicon-containing dispersion in polyetherol was yielded with a viscosity of 1413 mPas (25 °C & 100 s⁻¹) and an OH value of 27.5 mg_{KOH}/g_{polymer} and a d[4,3] = 9.14 µm. Precipitation of the dispersed phase was observed in the course of time.

### Comparative Example 5

### Dispersion of alumosilicate in polyetherol with additive 2 (dispersion 5)

A Büchi autoclave was filled with 194 g of dispersion 1 followed by addition of 6 g (3 wt%) rheology additive 2 (BYK 7420 ES by Altana). The mixture was further stirred for 15 min at 25 °C. A silicon-containing dispersion in polyetherol was yielded with a viscosity of 1427 mPas (25 °C & 100 s⁻¹) and an OH value of 27.5 mg_{KOH}/g_{polymer} and a d[4,3] = 9.14 µm. Precipitation of the dispersed phase was observed in the course of time.

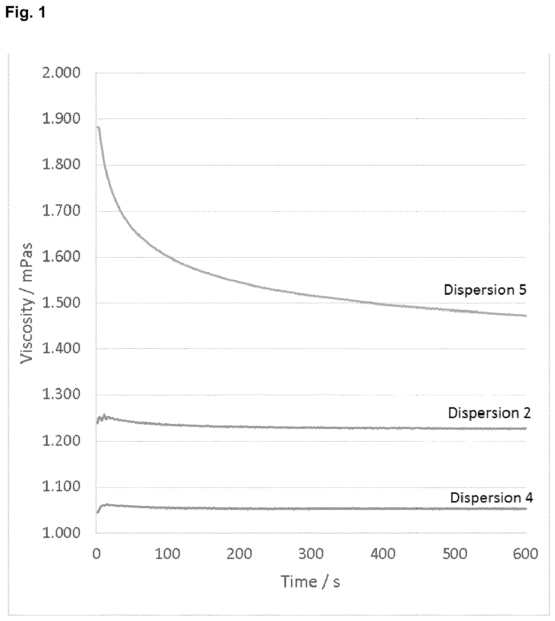

Figure 1 shows the time-dependent viscosity of exemplary dispersions.

## Claims

1. The use of an N-carbaldehyde of a nitrogen-containing aliphatic heterocyclic compound as a stabilizer for inorganic particles in polyols.

2. The use according to claim 1, wherein the nitrogen-containing aliphatic heterocyclic compound is selected from piperidine, morpholine, piperazine, pyrrolidine, pyrrolidone, preferably morpholine.

3. The use according to claim 1 or 2, wherein the inorganic particles are selected from inorganic oxide particles, preferably oxidic silicon particles.

4. The use according to claim 3, wherein the oxidic silicon particles are selected from the group consisting of silicon dioxide, kaolin, silicates, silicic acid and mixtures thereof.

5. The use according to one of claims 1 to 4, wherein the inorganic particles, preferably the oxidic silicon particles have an average particle size (d₅₀) in the range of from 0.1 to 100 µm, preferably 0.5 to 20 µm, most preferably 1 to 10 µm.

6. The use according to one of claims 1 to 5, wherein the polyol is a polyether polyol, preferably having an OH value of less than 100 mg_{KOH}/g, or a polyester polyol having a molecular weight (Mₙ) of from 500 to 5000 g/mol.

7. The use according to claim 6, wherein the polyether polyol is a two- to eight-functional polyether polyol preferably having a molecular weight (Mₙ) of from 500 to 30,000 g/mol.

8. Dispersion, comprising inorganic particles in a polyol and an N-carbaldehyde of a nitrogen-containing aliphatic heterocyclic compound as a stabilizer for the inorganic particles in the polyol.

9. Dispersion according to claim 8, wherein the nitrogen-containing aliphatic heterocyclic compound is selected from piperidine, morpholine, piperazine, pyrrolidine, pyrrolidone, preferably morpholine.

10. The dispersion according to claim 8 or 9, wherein the inorganic particles are selected from inorganic oxide particles, preferably oxidic silicon particles.

11. Dispersion according to claim 10, wherein the oxidic silicon particles are selected from the group consisting of silicon dioxide, kaolin, silicates, silicic acid and mixtures thereof.

12. The dispersion according to one of claims 8 to 11, wherein the inorganic particles, preferably the oxidic silicon particles, have an average particle size (d₅₀) in the range of from 0.1 to 100 µm, preferably 0.5 to 20 µm, most preferably 1 to 10 µm.

13. The dispersion according to one of claims 8 to 12, wherein the polyol is a polyether polyol, preferably having an OH value of less than 100 mg_{KOH}/g, or a polyester polyol having a molecular weight (Mₙ) of from 500 to 5000 g/mol.

14. The dispersion according to claim 13, wherein the polyol is selected from two to eight-functional, preferably two- to six-functional polyether polyols, preferably of a molecular weight (Mₙ) of from 500 to 30,000 g/mol, more preferably 10,000 to 25,000 g/mol.

15. The dispersion according to one of claims 8 to 14, wherein the oxidic silicon particles are selected from silicon dioxide particles and aluminium silicate particles.

16. A process for preparing a dispersion according to one of claims 8 to 15 comprising the step of mixing the N-carbaldehyde of a nitrogen-containing aliphatic heterocyclic compound with the inorganic particles, preferably the oxidic silicon particles selected from the group consisting of silicon dioxide, kaolin, silicates, silicic acid and mixtures thereof in the at least one polyol.

17. The process according to claim 15, wherein the mixing is carried out at a temperature in the range of from 0 to 260 °C, preferably 20 to 200 °C, most preferably 25 to 180 °C.

18. The use of a dispersion according to one of claims 8 to 15 for preparing a polyurethane.

19. The use of a dispersion according to one of claims 8 to 15 for reducing the flammability of and/or emissions from polyurethanes.

20. A process for preparing a polyurethane, comprising mixing a dispersion of one of claims 8 to 15 or prepared by the process of one of claims 16 or 17 with isocyanates and/or polyisocyanates having at least 1.7 isocyanate groups and, if appropriate, one or more of further compounds having hydrogen atoms which are reactive towards isocyanates, chain extenders and/or crosslinkers, catalysts, blowing agents and further additives, and reacting the mixture to form the polyurethane.

21. The process according to claim 20, wherein the polyurethane is a polyurethane foam and the mixture comprises blowing agents.

22. The process according to claim 20, wherein the polyurethane is a compact polyurethane material.

23. A polyurethane, obtainable by the process according to one of claims 20 to 22.
